# EUROPÄISCHE PATENTANMELDUNG

(11) **EP 1 107 384 A1**
(43) Veröffentlichungstag der Anmeldung: **13.06.2001**
(21) Anmeldenummer: 00125880.5
(22) Anmeldetag: 25.11.2000
(51) Int. Cl.: H01R 13/533, H01R 13/66

(54) **Anschlussordnung einer mineral-isolierten Leitung**

(30) Priorität: 07.12.1999 DE 19958762
(71) Anmelder: Heraeus Electro-Nite International N.V., 3530 Houthalen (BE)
(72) Erfinder: Baerts, Christiaan, 3580 Beringen-Pal (BE); Jaenen, Jean-Paul, 3600 Genk (BE); van Gerwen, Peter, 3191 Hever (BE)
(74) Vertreter: Kühn, Hans-Christian

(57) **Zusammenfassung**

Die Erfindung betrifft eine Anschlußanordnung einer mineral-isolierten Leitung mit zwei Enden an mindestens einen rohrförmigen Körper, wobei mindestens ein Ende mit einem rohrförmigen Körper teilweise überlappend angeordnet und durch Schweißen oder Löten fixiert ist, wobei im Bereich der Überlappung eine Mantelfläche angeordnet ist. Es ergibt sich das Problem, eine einfach herzustellende, mechanisch stabile Anschlußanordnung einer mineral-isolierten Leitung an einen rohrförmigen Körper bereitzustellen. Das Problem wird dadurch gelöst, daß die Mantelfläche eine Struktur aufweist und daß das Ende der mineral-isolierten Leitung und der rohrförmige Körper sich allseitig im Bereich der Überlappung berühren und daß die Berührungsfläche kleiner ist als die Mantelfläche.

## Beschreibung

Die Erfindung betrifft eine Anschlußanordnung einer mineral-isolierten Leitung an mindestens einen rohrförmigen Körper, wobei mindestens ein Ende der beiden Enden der mineral-isolierten Leitung mit einem rohrförmigen Körper teilweise überlappend angeordnet und durch Schweißen oder Löten fixiert ist.

Solche Anschlußanordnungen, inbesondere für Sensoren im Bereich der Abgasführung eines Kraftfahrzeuges, sind bekannt.

WO 95/18965 beschreibt einen Meßfühler mit einem metallischen Gehäuse und einem darin angeordneten Sensorchip, der ein Sensorelement aufweist. Der Sensorchip ist mit den elektrischen Leitern einer mineral-isolierten Metallmantelleitung verbunden. Das Gehäuse ist mit der Metallmantelleitung über eine Buchse verbunden, die auf die Metallmantelleitung aufgesetzt und mit ihr durch Laserschweißen verbunden ist. Das Gehäuse und die Buchse sind ebenfalls duch Laserschweißen verbunden.

Zur Herstellung der Laserschweißverbindungen zwischen Metallmantelleitung und Buchse sowie zwischen Buchse und Gehäuse müssen die jeweilgen zu verbindenden Teile im Durchmes-ser einander angepaßt werden. Eine solche Anpassung ist notwendig, um Luftspalte zwischen den Teilen zu vermeiden, die generell das Laserschweißen erschweren. Zudem ist die so gebildete Schweißverbindung anfällig gegen Vibrationen, die insbesondere in Kraftfahrzeugen eine große Rolle spielen. Ein Bruch der Schweißverbindung führt zu einer hohen mechanischen Beanspruchung der elektrischen Verbindung zum Sensorchip und kann zu einem Ausfall des Sensors führen.

Es ergibt sich das Problem, eine einfach herzustellende Anschlußanordnung einer mineral-isolierten Leitung an einen rohrförmigen Körper bereitzustellen, die die Nachteile des Standes der Technik vermeidet.

Das Problem wird dadurch gelöst, daß eine Mantelfläche im Bereich der Überlappung eine erhabene Struktur aufweist und das Ende der mineral-isolierten Leitung und der rohrförmige Körper sich allseitig im Bereich der Überlappung berühren, wodurch die Berührungsfläche kleiner ist als die Mantelfläche.

Es ergibt sich eine einfache Anschlußanordnung mit außerordentlicher mechanischer Festigkeit und hoher Beständigkeit gegen Vibrationen, die sich insbesondere hervorragend für eine erfin-dungsgemäße Verwendung an Sensoren eignet, die in oder an Kraftfahrzeugen eingesetzt werden. Aufgrund der strukturierten Mantelfläche ist zudem eine geringe Wärmeleitung im Bereich der Abschlußanordnung festzustellen. So kann beispielsweise unter Verwendung der Anschlußanordnung ein Sensor zum Einsatz in heißen Gasen mit einer sehr kurz dimensionierten mineral-isolierten Leitung kontaktiert werden, die den Übergang zu einer Anschlußhülse und einem thermisch nur gering belastbaren Kabel, beispielsweise ein Kabel mit einer Kunststoff-Ummantelung, bildet. Eine so gebildete kurze Verbindung zwischen Sensor und Kabel ist bei nur geringen zu Verfügung stehenden Einbaudimensionen, wie sie üblicherweise in einem Kraftfahrzeug vorliegen, besonders vorteilhaft.

Besonders vorteilhaft ist es, wenn das Ende der mineral-isolierten Leitung in den rohrförmigen Körper eingesteckt ist. Der rohrförmige Körper kann beispielsweise ein Sensorgehäuse oder eine Anschlußhülse zu einem flexiblen Kabel sein.

Es hat sich bewährt, wenn die strukturierte Mantelfläche aus der äußeren Umfangsfläche des Endes der mineral-isolierten Leitung gebildet ist. Möglich ist aber auch, daß die strukturierte Mantelfläche aus der inneren Umfangsfläche des röhrförmigen Körpers gebildet ist.

Die Strukturierung der Mantelfläche kann dabei aus einer Riffelung gebildet sein. Geeignete Arten von Riffelungen sind beispielsweise Längsriffelungen, Querriffelungen oder Pünktchen-riffelungen. Aber auch eine Riffelung, die ähnlich einem Gewinde beziehungsweise als Schrägriffelung ausgebildet ist, ist verwendbar.

Als Struktur für eine Mantelfläche eignet sich auch ein Draht oder ein Drahtgewebe, welches befestigt sein kann.

Nach einer überlappenden Anordnung eines rohrförmigen Körpers mit einer mineral-isolierten Leitung, wobei im Bereich der Überlappung die strukturierte Mantelfläche angeordnet ist, wird der äußere Umfang des rohrförmigen Körpers vermindert. Dabei wird die strukturierte Mantelfläche verformt und eine formschlüssige Verbindung zwischen dem rohrförmigen Körper und der mineral-isolierten Leitung hergestellt. Die so aneinander angepassten Teile werden nun zusätzlich durch eine Laserschweißung verbunden.

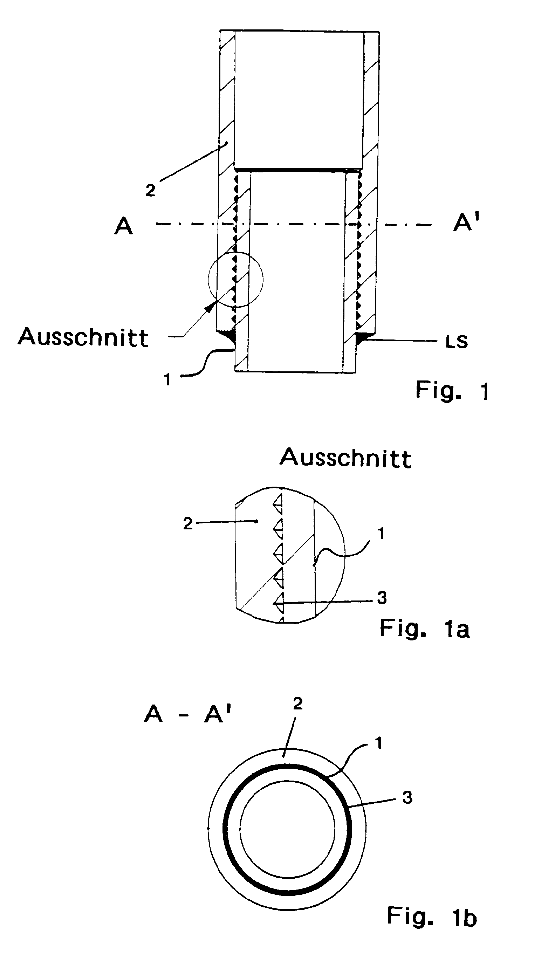

Die Figuren 1 bis 7 sollen die erfindungsgemäße Anschlußanordnung beispielhaft erläutern. Die mineral-isolierte Leitung, die normalerweise aus mindestens einem elektrischen Leiter, einem metallischen Mantelrohr und einem mineralischen Füllpulver gebildet ist, ist in den Figuren 1 bis 6b nur schematisch ohne elektrische Leiter und ohne mineralisches Füllpulver dargestellt.
Fig. 1, 1a, 1b: Anschlußanordnung mit mineral-isolierter Leitung und rohrförmigem Körper
Fig. 2, 2a, 2b: Mineral-isolierte Leitung mit strukturierter Mantelfläche: Längsriffelung
Fig. 3, 3a, 3b: Mineral-isolierte Leitung mit strukturierter Mantelfläche: Querriffelung
Fig. 4, 4a, 4b: Mineral-isolierte Leitung mit strukturierter Mantelfläche: Schrägriffelung
Fig. 5, 5a, 5b: Mineral-isolierte Leitung mit strukturierter Mantelfläche: Pünktchenriffelung
Fig. 6, 6a, 6b: Mineral-isolierte Leitung mit strukturierter Mantelfläche: Drahtgewebe
Fig. 7, 7a: Anschlußanordnung mit Sensorgehäuse und Anschlußhülse

Fig. 1 zeigt eine Anschlußanordnung mit einer mineral-isolierten Leitung 1 und einem rohrförmigen Körper 2. Ein Ende der mineral-isolierten Leitung 1 ist überlappend mit dem rohrförmigen Körper 2 angeordnet und in diesen eingesteckt. Die äußere Umfangsfläche des eingesteckten Endes der mineral-isolierten Leitung 1 kann mit einer strukturierten Mantelfläche gestaltet sein, wobei die innere Umfangsfläche des rohrförmigen Körpers 2 im Bereich der Überlappung glatt gestaltet wird. Es kann aber auch die innere Umfangsfläche des röhrförmigen Körpers als strukturierte Mantelfläche ausgebildet sein, wobei die die äußere Umfangsfläche des eingesteckten Endes der mineral-isolierten Leitung 1 glatt ausgebildet wird. Nachdem die mineral-isolierte Leitung 1 und der rohrförmige Körper 2 überlappend angeordnet sind, wird der äußere Umfang des rohrförmigen Körpers 2 im Bereich der Überlappung vermindert, beispielsweise durch Pressen. Dabei wird die strukturierte Mantelfläche verformt und ein formschlüssiger Verbund zwischen rohrförmigem körper 2 und der mineral-isolierten Leitung 1 hergestellt. An-schließend werden der rohrförmige Körper 2 und die mineral-isolierte Leitung 1 durch Ausbildung einer Laserschweißnaht LS verbunden.

Fig. 1 a zeigt einen Ausschnitt aus Fig. 1 im Bereich der strukturierten Mantelfläche mit einer Riffelung 3.

Fig. 1 b zeigt den Querschnitt A - A' der mineral-isolierten Leitung 1 aus Fig. 1 mit dem rohrförmigen Körper 2, der mineral-isolierten Leitung 1 und der Riffelung 3.

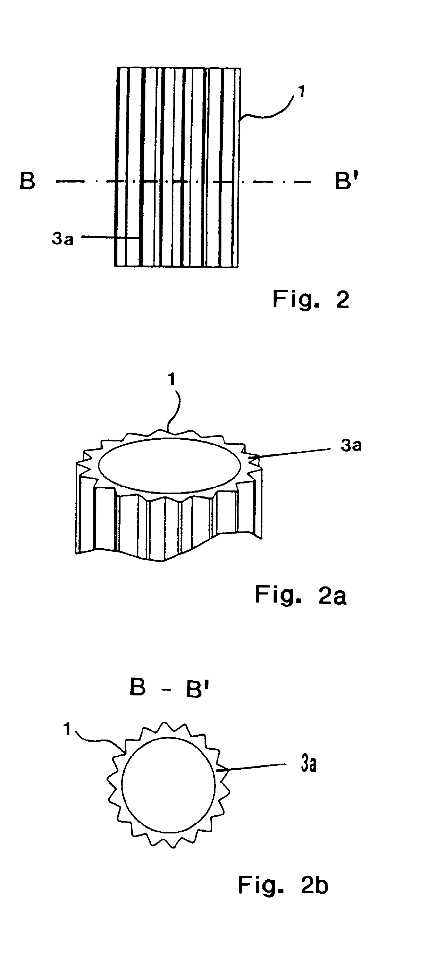

Fig. 2 zeigt schematisch ein Stück einer mineral-isolierten Leitung 1 mit einer Längsriffelung 3a auf ihrer äußeren Umfangsfläche.

Fig. 2a zeigt die mineral-isolierte Leitung 1 mit der Längsriffelung 3a aus Fig. 2 in einer Schrägansicht.

Fig. 2b zeigt den Querschnitt B - B' der mineral-isolierten Leitung 1 aus Fig. 2 mit der Längsriffelung 3a.

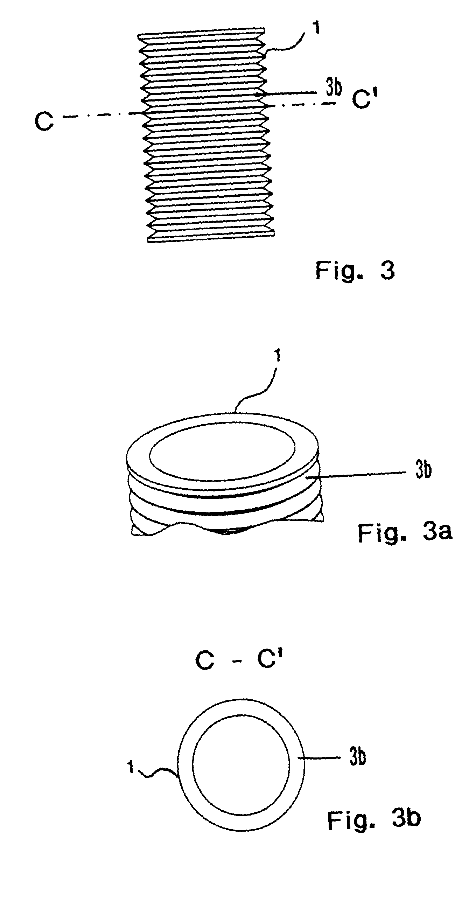

Fig. 3 zeigt schematisch ein Stück einer mineral-isolierten Leitung 1 mit einer Querriffelung 3b auf ihrer äußeren Umfangsfläche.

Fig. 3a zeigt die mineral-isolierte Leitung 1 mit der Querriffelung 3b aus Fig. 3 in einer Schrägansicht.

Fig. 3b zeigt den Querschnitt C - C' der mineral-isolierten Leitung 1 aus Fig. 3 mit der Querriffelung 3a.

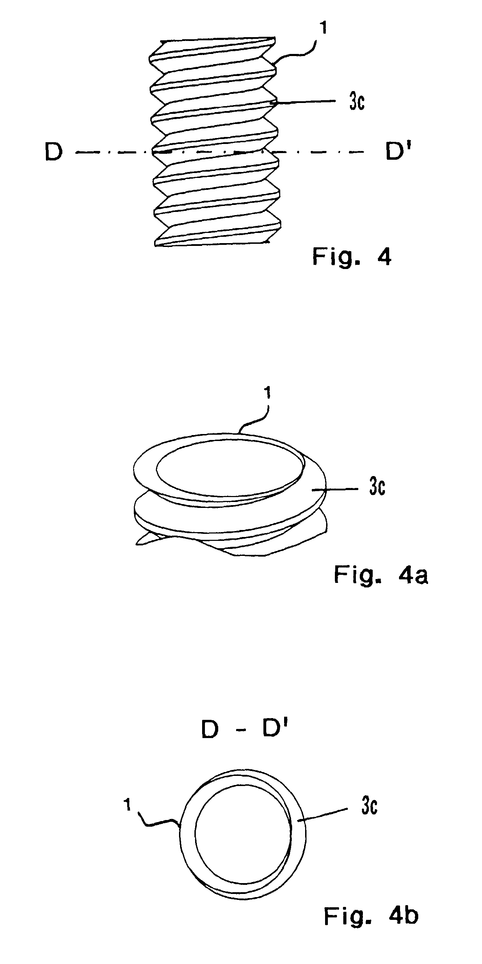

Fig. 4 zeigt schematisch ein Stück einer mineral-isolierten Leitung 1 mit einer Schrägriffelung 3c auf ihrer äußeren Umfangsfläche.

Fig. 4a zeigt die mineral-isolierte Leitung 1 mit der Schrägriffelung 3c aus Fig. 4 in einer Schrägansicht.

Fig. 4b zeigt den Querschnitt D - D' der mineral-isolierten Leitung 1 aus Fig. 4 mit der Schrägriffelung 3c.

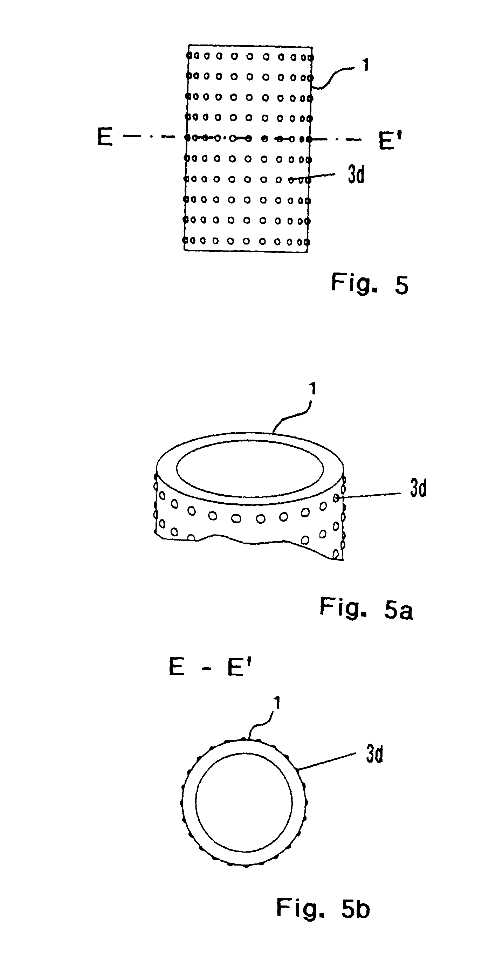

Fig. 5 zeigt schematisch ein Stück einer mineral-isolierten Leitung 1 mit einer Pünktchenriffelung 3c auf ihrer äußeren Umfangsfläche.

Fig. 5a zeigt die mineral-isolierte Leitung 1 mit der Pünktchenriffelung 3c aus Fig. 5 in einer Schrägansicht.

Fig. 5b zeigt den Querschnitt E - E' der mineral-isolierten Leitung 1 aus Fig. 5 mit der Schrägriffelung 3c.

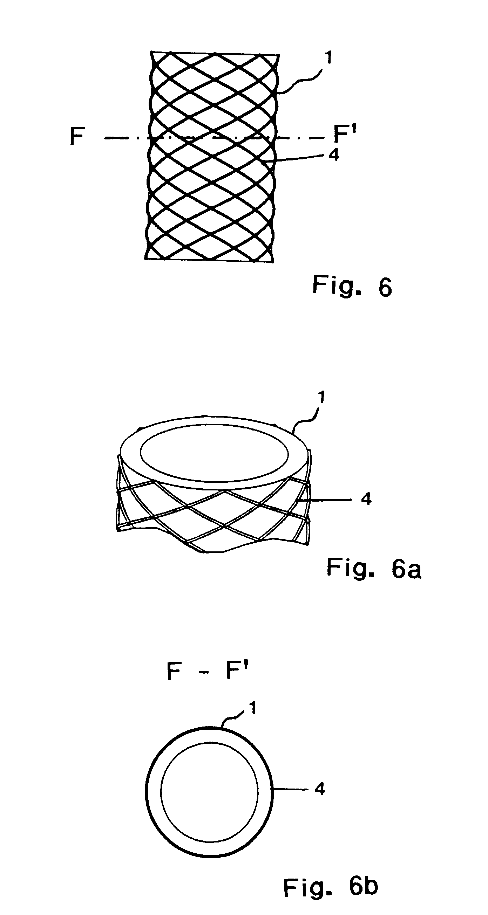

Fig. 6 zeigt schematisch ein Stück einer mineral-isolierten Leitung 1 mit einem Drahtgewebe 4 auf ihrer äußeren Umfangsfläche.

Fig. 6a zeigt die mineral-isolierte Leitung 1 mit dem Drahtgewebe 4 aus Fig. 6 in einer Schrägansicht.

Fig. 6b zeigt den Querschnitt F - F' der mineral-isolierten Leitung 1 aus Fig. 6 mit dem Drahtgewebe 4.

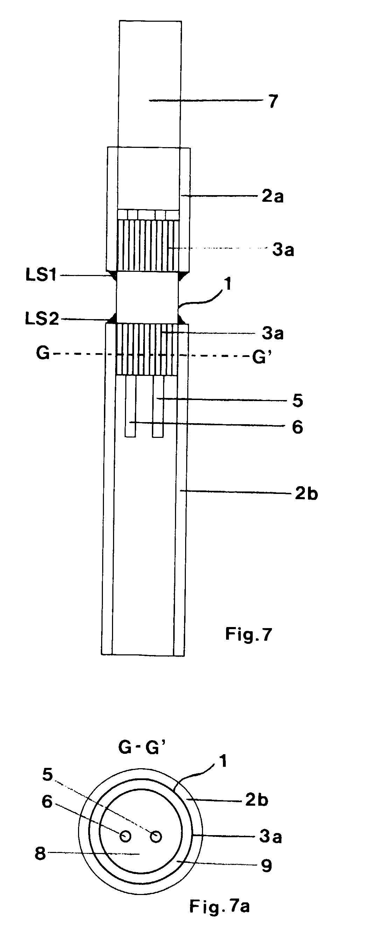

Fig. 7 zeigt eine Anschlußanordnung mit einer mineral-isolierten Leitung 1, die zwei elektrische Leiter 5;6 aufweist und die an ihren beiden Enden jeweils eine Längsriffelung 3a aufweist. Das eine Ende der mineral-isolierten Leitung 1 ist im Bereich der Riffelung 3a überlappend mit einer Anschlußhülse 2a angeordnet, die den Übergang zu einem thermisch nur niedrig belastbaren Kabel 7 bildet. Die Anschlußhülse 2a ist auf die mineral-isolierte Leitung im Bereich der Riffelung 3a aufgepresst. Eine anschließend hergestellt Laserschweißnaht LS1 verbindet die Anschlußhülse 2a mit der mineral-isolierten Leitung 1. Das andere Ende der mineral-isolierten Leitung 1 ist im Bereich der Riffelung 3a überlappend mit einem Sensorgehäuse 2b angeordnet. Das Sensorgehäuse 2b ist auf die mineral-isolierte Leitung im Bereich der Riffelung 3a aufgepresst. Eine anschließend hergestellt Laserschweißnaht LS2 verbindet das Sensorgehäuse 2b mit der mineral-isolierten Leitung 1.

Fig. 7a zeigt den Querschnitt G - G' aus Fig. 7 mit der mineral-isolierten Leitung 1, der Längsriffelung 3a und dem Sensorgehäuse 2b. Die mineral-isolierte Leitung 1 weist zwei elektrische Leiter 5; 6 auf, die durch ein mineralisches Füllpulver 8 vom metallischen Mantelrohr 9 isoliert angeordnet sind.

## Patentansprüche

1. Anschlußanordnung einer mineral-isolierten Leitung an mindestens einen rohrförmigen Körper, wobei mindestens ein Ende der beiden Enden der mineral-isolierten Leitung mit einem rohrförmigen Körper teilweise überlappend angeordnet und durch Schweißen oder Löten fixiert ist, wobei eine Mantelfläche im Bereich der Überlappung eine erhabene Struktur aufweist und wobei das Ende der mineral-isolierten Leitung und der rohrförmige Körper sich allseitig im Bereich der Überlappung berühren, wodurch die Berührungsfläche kleiner ist als die Mantelfläche.

2. Anschlußanordnung einer mineral-isolierten Leitung nach Anspruch 1, dadurch gekennzeichnet, daß das Ende der mineral-isolierten Leitung in den rohrförmigen Körper eingesteckt ist.

3. Anschlußanordnung einer mineral-isolierten Leitung nach mindestens einem der Ansprüche 1 bis 2, dadurch gekennzeichnet, daß der rohrförmige Körper ein Sensorgehäuse oder eine Anschlußhülse ist.

4. Anschlußanordnung einer mineral-isolierten Leitung nach mindestens einem der Ansprüche 1 bis 3, dadurch gekennzeichnet, daß die strukturierte Mantelfläche aus der äußeren Umfangsfläche des Endes der mineral-isolierten Leitung gebildet ist.

5. Anschlußanordnung einer mineral-isolierten Leitung nach mindestens einem der Ansprüche 1 bis 3, dadurch gekennzeichnet, daß die strukturierte Mantelfläche aus der inneren Umfangsfläche des rohrförmigen Körpers gebildet ist.

6. Anschlußanordnung einer mineral-isolierten Leitung nach einem der Ansprüche 1 bis 5, dadurch gekennzeichnet, daß die Struktur aus einer Riffelung gebildet ist.

7. Anschlußanordnung einer mineral-isolierten Leitung nach Anspruch 6, dadurch gekennzeichnet, daß die Riffelung als Längsriffelung ausgebildet ist.

8. Anschlußanordnung einer mineral-isolierten Leitung nach Anspruch 6, dadurch gekennzeichnet, daß die Riffelung als Querriffelung ausgebildet ist.

9. Anschlußanordnung einer mineral-isolierten Leitung nach Anspruch 6, dadurch gekennzeichnet, daß die Riffelung als Schrägriffelung oder Gewinde ausgebildet ist.

10. Anschlußordnung einer mineral-isolierten Leitung nach Anspruch 6, dadurch gekennzeichnet, daß die Riffelung als Pünktchenriffelung ausgebildet ist.

11. Anschlußanordnung einer mineral-isolierten Leitung nach mindestens einem der Ansprüche 1 bis 5, dadurch gekennzeichnet, daß die Struktur aus einem Draht oder einem Drahtgewebe gebildet ist.

12. Verwendung der Anschlußanordnung nach mindestens einem der Ansprüche 1 bis 11 für Sensoren, die in Kraftfahrzeugen eingesetzt werden.
